# EUROPÄISCHE PATENTANMELDUNG

(11) **EP 0 692 404 A2**
(43) Veröffentlichungstag der Anmeldung: **17.01.1996**
(21) Anmeldenummer: 95107365.9
(22) Anmeldetag: 16.05.1995
(51) Int. Cl.: B60Q 1/076

(54) **Vorrichtung zum Verstellen der Neigung von Scheinwerfern bei Fahrzeugen**

(30) Priorität: 15.06.1994 DE 9409590 U
(71) Anmelder: ROBERT BOSCH GMBH, D-70442 Stuttgart (DE)
(72) Erfinder: Neubauer, Ulrich, Ing., D-73235 Weilheim (DE); Konto, Elefterios, Dipl. Ing., D-71636 Ludwigsburg (DE)

(57) **Zusammenfassung**

Die Vorrichtung weist ein Gehäuse (20) auf, in dem ein Antriebsmotor (22) angeordnet ist, der ein auf den Scheinwerfer wirkendes Stellelement (24,58) antreibt, das mehrteilig ausgebildet ist und eine längsverschiebbar jedoch unverdrehbar gelagerte Stellstange (58) und eine mit dieser über ein Gewinde (56,60) verbundene Stellwelle (24) aufweist, die vom Antriebsmotor (22) in einer Längsbewegung angetrieben wird. Auf einen Abschnitt (54) der Stellwelle (24) ist von außerhalb des Gehäuses (20) ein Betätigungselement (78) aufgeschoben, das mit dem Abschnitt (54) in Drehrichtung gekoppelt, jedoch längsverschiebbar verbunden ist und das am Gehäuse (20) mittels einer Rastverbindung (75,81,82) festlegbar ist und bei Überschreiten einer bestimmten Umfangskraft lösbar und das Betätigungselement (78) in eine nächste Drehstellung drehbar ist, in der die Rastverbindung (75,81,82) wieder hergestellt ist. Auf diese Weise ist einerseits eine Grundeinstellung des Scheinwerfers ermöglicht und andererseits eine ungewollte Verstellung des Scheinwerfers vermieden.

## Beschreibung

### Stand der Technik

Die Erfindung geht aus von einer Vorrichtung zum Verstellen der Neigung von Scheinwerfern bei Fahrzeugen nach der Gattung des Anspruchs 1.

Eine solche Vorrichtung ist durch die DE-U 91 07 346 bekannt. Diese Vorrichtung weist ein Gehäuse auf in dem ein Antriebsmotor angeordnet ist, der über ein Getriebe ein auf den Scheinwerfer wirkendes Stellelement antreibt. Das Stellelement ist mehrteilig ausgebildet und weist eine längsverschiebbar jedoch unverdrehbar gelagerte Stellstange auf, die auf den Scheinwerfer wirkt, und eine mit der Stellstange über ein Gewinde verbundene Stellwelle. Die Stellwelle wird durch den Antriebsmotor über das Getriebe in einer Bewegung in Längsrichtung angetrieben. Die Stellwelle weist einen der Stellstange abgewandten Abschnitt auf, an dem zu einer Verdrehung der Stellwelle angegriffen werden kann. Beim Betrieb des Antriebsmotors wird die Stellwelle zusammen mit der Stellstange in Längsrichtung bewegt. Zusätzlich kann durch Verdrehung der Stellwelle eine Längsbewegung der Stellstange relativ zur Stellwelle über das diese verbindende Gewinde bewirkt werden, wodurch eine Grundeinstellung der Neigung des Scheinwerfers ermöglicht ist. Eine Verdrehung der Stellwelle beim Betrieb des Antriebsmotors ist jedoch unerwünscht und muß verhindert werden, da sonst keine genaue kontrollierte Bewegung der Stellstange und daher keine genaue Einstellung der Neigung des Scheinwerfers möglich ist.

### Vorteile der Erfindung

Die erfindungsgemäße Vorrichtung zum Einstellen der Neigung von Scheinwerfern bei Fahrzeugen hat den Vorteil, daß eine Verdrehung der Stellwelle durch den Antriebsmotor bewirkt durch die Rastverbindung verhindert ist, jedoch eine Verdrehung der Stellwelle zu einer Grundeinstellung über das Betätigungselement bei Aufbringen einer ausreichenden Umfangskraft zur Lösung der Rastverbindung möglich ist.

In den abhängigen Ansprüchen sind vorteilhafte Ausgestaltungen und Weiterbildungen der Erfindung angegeben. Im Anspruch 2 ist eine einfache und sicher wirkende Rastverbindung angegeben. Durch die Ausbildung gemäß Anspruch 3 und 4 ist sichergestellt, daß die zu einer Verdrehung des Betätigungselements erforderliche Umfangskraft nicht zu hoch ist und eine Beschädigung des Betätigungselements vermieden wird.

### Zeichnung

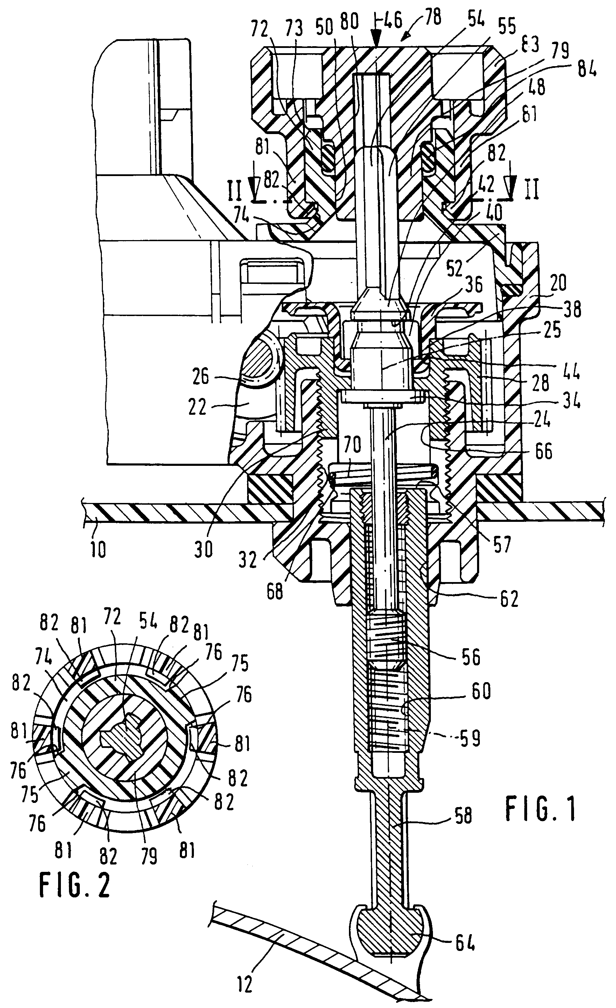

Ein Ausführungsbeispiel der Erfindung ist in der Zeichnung dargestellt und in der nachfolgenden Beschreibung näher erläutert. Es zeigen Figur 1 eine Vorrichtung zum Verstellen der Neigung von Scheinwerfern bei Fahrzeugen in einem Längsschnitt mit abschnittsweise einem Scheinwerfer und Figur 2 die Vorrichtung in einem Querschnitt entlang Linie II-II in Figur 1.

### Beschreibung des Ausführungsbeispiels

Ein in Figur 1 dargestellter Scheinwerfer für Fahrzeuge, insbesondere für Kraftfahrzeuge, ist an der Karosserie des Fahrzeugs befestigt. Zum Ausgleich von durch Beladung des Fahrzeugs bedingten Neigungsänderungen des Fahrzeugs, die zu einer Neigungsänderung des Scheinwerfers und damit zu einer Änderung der Leuchtweite des vom Scheinwerfer ausgesandten Lichtbündels führen würden, ist der Scheinwerfer durch eine Vorrichtung in seiner Neigung verstellbar. Die Vorrichtung weist ein auf den Scheinwerfer wirkendes Stellelement auf, und ist mit einem Vorwahlschalter verbunden, durch den die Neigung des Scheinwerfers zwischen verschiedenen Einstellungen gewählt werden kann. Alternativ kann die Vorrichtung auch mit einer Steuereinrichtung verbunden sein, die die Neigungsänderungen des Fahrzeugs erfaßt und abhängig davon die Vorrichtung ansteuert, so daß die Leuchtweite des vom Scheinwerfer ausgesandten Lichtbündels konstant bleibt. Der Scheinwerfer ist beim Ausführungsbeispiel als ein Gehäusescheinwerfer ausgeführt, bei dem innerhalb eines Gehäuses 10 ein Reflektor 12 zumindest um eine horizontale Achse schwenkbar angeordnet ist. Die Vorrichtung zum Verstellen der Neigung wirkt auf den Reflektor 12, der durch das Stellelement bewirkt zur Änderung der Neigung um die Achse schwenkbar ist. Der Scheinwerfer könnte auch als ein sogenannter Einsatzscheinwerfer ausgeführt werden, wobei dann durch das Stellelement der gesamte Scheinwerfer zur Änderung seiner Neigung um eine horizontale Achse schwenkbar ist.

Die Vorrichtung zum Verstellen der Neigung weist ein Gehäuse 20 aus Kunststoff auf, das an der Rückseite des Scheinwerfergehäuses 10 befestigt ist, beispielsweise mittels einer Bajonettverbindung. Im Gehäuse 20 ist ein elektrischer Antriebsmotor 22 angeordnet, der über ein Getriebe eine Stellwelle 24 antriebt. Das Getriebe weist eine vom Antriebsmotor 22 angetriebene Schnecke 26 auf, die wiederum ein Schneckenrad 28 antreibt. Das Schneckenrad 28 ist auf der Stellwelle 24 drehbar gelagert und weist einen Abschnitt 30 mit einem Außengewinde auf. Der Gewindeabschnitt 30 des Schneckenrads 28 ist in eine Gewindebohrung 32 im Gehäuse 20 eingeschraubt. Die Stellwelle 24 weist einen Bund 34 auf, zwischen dem und der Stirnseite eines auf der Stellwelle 24 angeordneten Befestigungselements 36 das Schneckenrad 28 in Längsrichtung unverschiebbar gehalten ist. Das Befestigungselement 36 weist einen hohlzylindrischen Abschnitt 38 auf, von dem zur Stellwelle 24 hin wenigstens ein radial zur Stellwelle 24 federnd auslenkbarer Rastarm 40 absteht. Der Rastarm 40 schwenkt beim Aufschieben des Befestigungselements 36 auf die Stellwelle 24 beii Erreichen einer endstellung, in der die Stirnseite des Befestigungselements 36 am Schneckenrad 28 und dieses am Bund 34 anliegt, hinter eine Ringschulter 42 und rastet dort ein. Der hohlzylindrische Abschnitt 38 des Befestigungselements 36 taucht in eine zylindrische Vertiefung 44 des Schneckenrads 28 ein und liegt mit seiner Außenseite an der Wandung der Vertiefung 44 an. Der Rastarm 40 liegt in der Endstellung mit annähernd seiner gesamten zur Stellwelle 24 weisenden Fläche auf der Stellwelle 24 auf. Auf der entgegen der Aufschubrichtung 46 des Befestigungselements 36 weisenden Seite der Ringschulter 42 der Stellwelle 24 ist ein konischer Aufschubabschnitt 48 ausgebildet, auf dem der Rastarm 40 beim Aufschieben des Befestigungselements 36 leicht aufgleiten kann. Die Stellwelle 24 weist einen in eine Öffnung 50 in einem Deckelteil 52 des Gehäuses 20 ragenden Abschnitt 54 auf.

Zum Reflektor 12 hin weist die Stellwelle 24 in ihrem Endbereich einen Abschnitt 56 mit einem Außengewinde auf. Auf den Gewindeabschnitt 56 der Stellwelle 24 ist eine Stellstange 58 aufgeschraubt, die mit einer Gewindebohrung 60 versehen ist. Die Stellstange 58 ragt durch eine Öffnung 62 im Gehäuse 20 in dieses hinein und weist einen außerhalb des Gehäuses 20 im Scheinwerfergehäuse 10 angeordneten Endbereich auf, der beispielsweise mit einem Kugelkopf 64 versehen ist und über diesen am Reflektor 12 angelenkt ist. Die Stellstange 58 ist in der Öffnung 62 in Längsrichtung verschiebbar geführt, jedoch nicht um ihre Längsachse 59 verdrehbar.

Der Gewindeabschnitt 30 des Schneckenrads 28 weist eine Längsbohrung 66 auf, in der der Bund 34 der Stellwelle 24 aufgenommen ist und in der sich in einer Ausnehmung 68 eine Druckfeder 70 entgegen der Aufschubrichtung 46 abstützt, die sich andererseits am in das Gehäuse 20 ragenden Stirnende 57 der Stellstange 58 abstützt. Durch die eingespannte Druckfeder 70 sind die Stellwelle 24 und die Stellstange 58 spielfrei miteinander gekoppelt.

Der Abschnitt 54 der Stellwelle 24 ist im Querschnitt, wie in Figur 2 dargestellt, nicht kreisförmig ausgebildet, sondern weist beispielsweise drei über den Umfang verteilt angeordnete, sich entlang der Längsachse 25 der Stellwelle 24 erstreckende Leisten 55 auf, die von einem Kern mit kleinerem Durchmesser radial nach außen ragen. Der Abschnitt 54 der Stellwelle 24 kann jedoch im Querschnitt auch anders von der Kreisform abweichend ausgebildet sein, beispielsweise in Polygonform. Das Deckelteil 52 des Gehäuses 20 weist einen koaxial zur Öffnung 50 nach außen abstehenden Lagerzapfen 72 auf, der im Querschnitt wie die Öffnung 50 zumindest annähernd kreisförmig ausgebildet ist. Die Öffnung 50 ist in ihrem nach außen weisenden Endbereich gegenüber ihrem zur Innenseite des Gehäuses 20 weisenden Bereich erweitert. Der nach außen weisende Endbereich des Lagerzapfens 72 weist nach außen hin eine Anschrägung 73 auf. Am zum Gehäuse 20 weisenden Endbereich des Lagerzapfens 72 ist in diesem eine umlaufende Ringnut 74 ausgebildet, in der einander etwa diametral gegenüberliegend zwei nach außen abstehende Vorsprünge 75 angeordnet sind. Die seitlichen Flächen 76 der Vorsprünge 75 sind so zueinander geneigt angeordnet, daß sie sich mit zunehmendem Abstand vom Lagerzapfen 72 einander annähern.

Auf den Abschnitt 54 der Stellwelle 24 ist von außerhalb des Gehäuses 20 ein Betätigungselement 78 in Aufschubrichtung 46 aufschiebbar, das aus einem elastischen Kunststoff besteht. Das Betätigungselement 78 weist einen in die Öffnung 50 eintretenden inneren zylinderförmigen Abschnitt 79 auf, der mit einer Öffnung 80 versehen ist, in die der Abschnitt 54 der Stellwelle 24 eintritt. Der Durchmesser des inneren Abschnitts 79 ist an seinem in das Gehäuse 20 ragenden vorderen Bereich kleiner als in seinem hinteren, aus dem Gehäuse 20 herausweisenden Bereich. Die Öffnung 80 des Abschnitts 79 ist in ihrem Querschnitt so auf den Querschnitt des Abschnitts 54 abgestimmt, daß das Betätigungselement 78 mit dem Abschnitt 54 in Drehrichtung um die Längsachse 25 der Stellwelle 24 gekoppelt ist, jedoch entlang der Längsachse 25 frei verschiebbar ist. Das Betätigungselement 78 weist außerdem einen den Lagerzapfen 72 umgebenden äußeren Abschnitt auf, der durch mehrere, beispielsweise sechs über den Umfang des Lagerzapfens 72 verteilt angeordnete Rastarme 81 gebildet ist. Die Rastarme 81 erstrecken sich etwa parallel zur Außenfläche des Lagerzapfens 72, wobei jedoch deren zum Gehäuse 20 weisende Endbereiche 82 radial nach innen zum Lagerzapfen 72 hin verlaufen. Zumindest die Endbereiche 82 der Rastarme 81 sind vom Lagerzapfen 72 weg federnd nach außen schwenkbar. Der innere Abschnitt 79 und die Rastarme 81 sind einstückig an einem Kopf 83 des Betätigungselements 78 angeformt, der über den Lagerzapfen 72 hinausragt. Der Kopf 83 kann beliebig ausgebildet sein, vorzugsweise so, daß an diesem direkt von Hand oder mittels eines Werkzeugs zu einer Verdrehung des Betätigungselements 78 angegriffen werden kann. Beispielsweise kann der Kopf 83 an seinem Umfang mit einer Rändelung versehen sein. Zur Montage wird das Betätigungselement 78 in Aufschubrichtung 46 auf den Abschnitt 54 der Stellwelle 24 aufgeschoben, wobei dessen Rastarme 81 über die Anschrägung 73 des Lagerzapfens 72 gleiten und dabei federnd nach außen geschwenkt werden. In der Endlage des Betätigungselements 78 rasten die Endbereiche 82 der Rastarme 81 in der Ringnut 74 am Lagerzapfen 72 ein, wodurch das Betätigungselement 78 in Längsrichtung am Deckelteil 52 gehalten ist. Die Endbereiche 82 der Rastarme 81 können in die Ringnut 74 nur einer solchen Drehstellung des Betätigungselements 78 einrasten, in der die Endbereiche 82 nicht auf die Vorsprünge 75 treffen. Zwischen dem mit größerem Durchmesser versehenen äußeren Bereich der Öffnung 50 im Deckelteil 52 und dem mit kleinerem Durchmesser versehenen Bereich des inneren Abschnitts 79 des Betätigungselements 78 ist ein elastischer Dichtring 84 eingespannt.

Nachfolgend wird die Funktion der Vorrichtung erläutert. Bei einer durch den Antriebsmotor 22 bewirkten Verstellung des Reflektors 10 bilden die Stellwelle 24 und die Stellstange 58 ein Stellelement, das insgesamt in Längsrichtung, das heißt in Richtung der Längsachse 25 der Stellwelle 24, bewegt wird. Dies wird dadurch bewirkt, daß durch den Antriebsmotor 22 über die Schnecke 26 das Schneckenrad 28 in einer Drehbewegung angetrieben wird, wobei sich das Schneckenrad 28 auf der Stellwelle 24 frei drehen kann, ohne daß sich die Stellwelle 24 mit diesem dreht. Das Schneckenrad 28 wird zusätzlich dadurch, daß es über seinen Gewindeabschnitt 30 in der Gewindebohrung 32 im Gehäuse 20 eingeschraubt ist, in Längsrichtung bewegt, wobei die Stellwelle 24 und die mit dieser verbundene Stellstange 58 diese Bewegung in Längsrichtung ebenfalls ausführen, da das Schneckenrad 28 auf der Stellwelle 24 in Längsrichtung unverschiebbar gehalten ist. Eine Relativbewegung in Längsrichtung zwischen der Stellstange 58 und der Stellwelle 24 tritt nicht auf, da die Stellwelle 24 nicht verdreht wird.

Bei einer Verdrehung der Stellwelle 24 um ihre Längsachse 25, die durch eine Verdrehung des Betätigungselements 78 ebenfalls um die Längsachse 25 als Drehachse bewirkt werden kann, findet eine Relativbewegung der Stellstange 58 zur Stellwelle 58 statt. Die Stellwelle 24 wird dabei nur um ihre Längsachse 25 verdreht, jedoch in Längsrichtung nicht bewegt. Die Stellstange 58 hingegen kann bedingt durch ihre unverdrehbare Lagerung in der Öffnung 62 im Gehäuse 20 nicht verdreht werden, sondern wird bedingt durch deren Gewindeverbindung mit der Stellwelle 24 nur in Längsrichtung bewegt. Hierdurch ist eine Grundeinstellung der Neigung des Reflektors 10 unabhängig vom Betrieb des Antriebsmotors 22 ermöglicht.

Bei einer durch den Antriebsmotor 22 bewirkten Bewegung des von der Stellwelle 24 und der Stellstange 58 gebildeten Stellelements muß eine Verdrehung der Stellwelle 24 um ihre Längsachse 25 verhindert werden, da ansonsten sich der durch das Schneckenrad 28 bewirkten Bewegung der Stellwelle 24 in Längsrichtung eine zusätzliche, durch die Gewindeverbindung der Stellstange 58 mit der Stellwelle 24 bewirkte Bewegung der Stellstange 58 in Längsrichtung überlagern würde, so daß keine definierte Verstellung der Neigung des Reflektors 12 mehr möglich ist. Zwischen dem Schneckenrad 28 und der Stellwelle 24 tritt zwangsweise eine Reibungskraft auf, die eine Verdrehung der Stellwelle 24 zusammen mit dem Schneckenrad 28 bewirken kann. Es ist daher erforderlich, die Stellwelle 24 gegen Verdrehen zu sichern, wobei jedoch wie vorstehend erläutert zu einer Grundeinstellung der Neigung des Reflektors 12 eine Verdrehung der Stellwelle 24 möglich sein soll. Dies wird durch das Betätigungselement 78 erreicht, wenn die Endbereiche 82 von dessen Rastarmen 81 in der Ringnut 74 zwischen den Vorsprüngen 75 eingerastet sind, da dann eine Verdrehung der Stellwelle 24 durch die über das Schneckenrad 28 auf die Stellwelle 24 wirkenden Umfangskraft und dem daraus resultierenden Drehmoment nicht ausreicht, um die Vorsprünge 75 zu überwinden. Zu einer Verdrehung des Betätigungselements 78 muß auf dieses eine so hohe Umfangskraft aufgebracht werden, daß die Endbereiche 82 von dessen Rastarmen 81 federnd nach außen geschwenkt werden und die Vorsprünge 75 überwunden werden können. Nach einem bestimmten Verdrehwinkel des Betätigungselements 78 rasten die Endbereiche 82 von dessen Rastarmen 81 in einer nächsten Drehstellung wieder neben den Vorsprüngen 75 ein. Durch die wie vorstehend beschrieben angeschrägten Seitenflächen 76 der Vorsprünge 75 ist sichergestellt, daß die Endbereiche 82 der Rastarme 81 sicher bei Überschreiten einer bestimmten auf das Betätigungselement 78 wirkenden Umfangskraft ausschwenken bevor sie beschädigt werden, beispielsweise durch Bruch. Durch eine entsprechende Anschrägung der Seitenflächen der Endbereiche 82 der Rastarme 81 könnte der gleiche Effekt erzielt werden. Es können auch sowohl die Seitenflächen 76 der Vorsprünge 75 als auch die der Endbereiche 82 der Rastarme 81 wie vorstehend beschrieben angeschrägt ausgebildet werden. Die Rastarme 81 des Betätigungselements 78 bilden zusammen mit den Vorsprüngen 75 eine Rastverbindung, durch die das Betätigungselement 78 in mehreren Drehstellungen am Gehäuse 20 blockiert werden kann. Insgesamt ist eine Verdrehung des Betätigungselements 78 und damit eine Grundeinstellung der Neigung des Reflektors 12 in mehreren Stufen ermöglicht, wobei die Verstellung um so feinfühliger möglich ist, je mehr Rastarme 81 das Betätigungselement 78 aufweist. Der Abstand zwischen zwei benachbarten Rastarmen 81 am Umfang des Betätigungselements 78 ist möglichst genau auf die Breite der Vorsprünge 75 abgestimmt, so daß das Betätigungselement 78 bei eingerasteten Rastarmen 81 nicht oder nur wenig verdreht werden kann, also mit geringem Spiel in Drehrichtung blockiert ist. Anstelle von zwei Vorsprüngen 75 können auch nur ein Vorsprung oder mehr als zwei Vorsprünge 75 vorgesehen werden.

## Patentansprüche

1. Vorrichtung zum Verstellen der Neigung von Scheinwerfern bei Fahrzeugen mit einem Gehäuse (20), in dem ein Antriebsmotor (22) angeordnet ist, der über ein Getriebe (26,28) ein auf den Scheinwerfer wirkendes Stellelement (24,58) antreibt, wobei das Stellelement (24,58) mehrteilig ausgebildet ist und eine längsverschiebbar jedoch unverdrehbar gelagerte Stellstange (58) und eine mit dieser über ein Gewinde (56,60) verbundene Stellwelle (24) aufweist, die vom Antriebsmotor (22) in einer Längsbewegung angetrieben wird und die einen der Stellstange (58) abgewandten Abschnitt (54) aufweist, an dem zu einer Verdrehung der Stellwelle (24) angegriffen werden kann, dadurch gekennzeichnet, daß auf den Abschnitt (54) der Stellwelle (24) ein von außerhalb des Gehäuses (20) zugängliches Betätigungselement (78) aufschiebbar ist, wobei dieses mit dem Abschnitt (54) in Drehrichtung gekoppelt, jedoch längsverschiebbar verbunden ist und daß das Betatigungselement (78) an einem Teil (52) des Gehäuses (20) mittels einer Rastverbindung (75,81,82) in mehreren Drehstellungen jeweils mit geringem Spiel in Drehrichtung blockierbar ist, wobei die Rastverbindung (75,81,82) bei Überschreiten einer bestimmten auf das Betätigungselement (78) wirkenden Umfangskraft lösbar und das Betätigungselement (78) in eine nächste Drehstellung drehbar ist, in der die Rastverbindung (75,81,82) wieder hergestellt ist.

2. Vorrichtung nach Anspruch 1, dadurch gekennzeichnet, daß die Rastverbindung (81,82,75) durch mehrere am Betätigungselement (78) über dessen Umfang verteilt angeordnete, federnd schwenkbare Rastarme (81,82) und wenigstens einen am Gehäuseteil (52) angeordneten Vorsprung (75) gebildet ist.

3. Vorrichtung nach Anspruch 2, dadurch gekennzeichnet, daß die seitlichen Flächen (76) des wenigstens einen Vorsprungs (75) über den Umfang des Betätigungselements (78) so angeschrägt sind, daß sie sich mit zunehmendem Abstand von der Drehachse (25) des Betätigungselements (78) einander annähern.

4. Vorrichtung nach Anspruch 2 oder 3, dadurch gekennzeichnet, daß die mit dem wenigstens einen Vorsprung (75) zusammenwirkenden Seitenflachen der Rastarme (81,82) über den Umfang so angeschrägt sind, daß sie sich mit zunehmendem Abstand von der Drehachse (25) des Betätigungselements (78) einander annähern.

5. Vorrichtung nach einem der Ansprüche 2 bis 4, dadurch gekennzeichnet, daß das Gehäuseteil (52) einen Lagerzapfen (72) aufweist, der zumindest annähernd koaxial zur Drehachse (25) des Betätigungselements (78) angeordnet ist und den das Betätigungselement (78) mit seinen Rastarmen (81,82) umgreift.

6. Vorrichtung nach Anspruch 5, dadurch gekennzeichnet, daß der Lagerzapfen (72) eine umlaufende Ringnut (74) aufweist, in die die Endbereiche (82) der Rastarme (81) eingreifen zur Befestigung des Betätigungselements (78) in Längsrichtung.

7. Vorrichtung nach Anspruch 6, dadurch gekennzeichnet, daß der wenigstens eine Vorsprung (75) in der Ringnut (74) angeordnet ist.

8. Vorrichtung nach einem der Ansprüche 2 bis 7, dadurch gekennzeichnet, daß das Betätigungselement (78) aus elastischem Kunststoff besteht und daß die Rastarme (81,82) einstückig an diesem ausgebildet sind.
